# EUROPEAN PATENT APPLICATION

(11) **EP 2 071 444 A1**
(43) Date of publication of application: **17.06.2009**
(21) Application number: 06810774.7
(22) Date of filing: 28.09.2006
(51) Int. Cl.: G06F 3/048, G06F 3/14

(54) **WINDOW DISPLAY SYSTEM**

(71) Applicant: Navitime Japan Co., Ltd., Tokyo 107-0062 (JP)
(72) Inventor: SAKAMOTO, Hiroshi, Minato-ku Tokyo 107-0062 (JP); OKURA, Yasuhiro, Minato-ku Tokyo 107-0062 (JP)
(74) Representative: Betten & Resch
(86) International application number: PCT/JP2006/319327
(87) International publication number: WO 2008/038368

(57) **Abstract**

An object, of the present invention is to provide a window display system that can display more links than those set in a window. The window display system has a text acquisition section for acquiring text of an original window in a superimposed region; a text transmitter for transmitting to a predetermined server the acquired text, the coordinates of the superimposed region, and the coordinates of each part of the text; and a display processor for receiving a screen generated in the server, and displaying the screen in the overlapping window, wherein the server has a screen generator for determining whether a predetermined keyword is contained in the text received from the user terminal, extracting the keyword and the URL in the case that the keyword is contained in the text, and generating and transmitting a screen in which a link to a URL is embedded in the position of a keyword contained in the text on the basis of the coordinates of the text received from the user terminal.

## Description

### TECHNICAL FIELD

The present invention relates to a window display system in a computer, and more specifically relates to window display system for superimposing and displaying a new window on a window displaying a website or the like, whereby information displayed on the original window is also displayed in the new window.

### BACKGROUND ART

In a computer (in the present specification, the term includes a mobile phone, PHS, PDA, and other portable communication terminals), a website is displayed in a window, and a user clicks on link-embedded text that is posted on the website, whereby a connection is made to the website of the link destination, and the contents of the new website are displayed in the window. Patent Documents 1 and 2 disclose systems for automatically generating such links.

A plurality of the windows described above can be displayed on a computer screen. However, when the windows are displayed while superimposed on each other, the window that is underneath is hidden by the window that is above, and the contents cannot be displayed. In order to solve this problem, Patent Documents 3 to 6 described below disclose systems capable of increasing the amount of information that can be displayed in a single screen by making the top window transparent.

Patent Document 1: Japanese Laid-open Patent Application No. 7-325827
Patent Document 2: Japanese Laid-open Patent Application No. 2006-4308
Patent Document 3: Japanese Laid-open Patent Application No. 6-301505
Patent Document 4: Japanese Laid-open Patent Application No. 7-104724
Patent Document 5: Japanese Laid-open Patent Application No. 8-292758
Patent Document 6: Japanese Laid-open Patent Application No. 2002-32168

### DISCLOSURE OF THE INVENTION

### PROBLEMS TO BE SOLVED BY THE INVENTION

As described above, the lower window must be made the active window (must be made the window which is the target of processing) in order to select the link of a website or the like displayed in the lower window when the upper window is made transparent and the lower window is displayed. Text that can be selected as a link destination is inherently limited to text that has been set in advance on the website, and websites of the link destination are also limited to those set on the website.

In other words, a separate window must be started up and a separate search must be made from the searched site or the like in the case that the user seeks to know about text on the website that does not have an embedded link. A attempt to follow the link to a website other than the website of the link destination set in advance on the website does not allow the goal to be obtained merely by selecting the link.

### MEANS USED TO SOLVE THE ABOVE-MENTIONED PROBLEMS

In view of the above, the present inventors invented a window display system capable of automatically generating the above-described links set by a website creator. This is achieved by superimposing and displaying a new window on the window of the website, and displaying automatically generated links of the text of the lower website on the upper website.

According to a first aspect of the present invention, there is provided a window display system for displaying a screen in which a link is embedded in text in a superimposed region of an original window in an overlapping window superimposed and displayed on the original window that is displayed on a display device of a user terminal, the window display system characterized in that an overlapping window processor in the user terminal comprises: a text acquisition section for acquiring text of the original window in the superimposed region of the original window and the overlapping window; a text transmitter for transmitting the acquired text to a predetermined server; and a display processor for receiving from at least the server a keyword contained in the text and a URL of the link destination thereof, extracting from a VRAM an image of the original window in the superimposed region to thereby display the image in the superimposed region of the overlapping window, embedding a link that corresponds to the URL of the link destination in relation to the portion that corresponds to the keyword in the displayed image and thereafter generating a screen provided with information that shows the presence of a link, and displaying the screen in the overlapping window, wherein the server has a dictionary storage section for correlating and storing a preset keyword and a URL of a website in which information related to the keyword is posted; a text receiver for receiving text from the user terminal; and a link determination section for determining whether a keyword stored in the dictionary storage section is contained in the text, and extracting and transmitting to the user terminal the keyword and the URL in the case that the keyword is contained in the text.

By using a configuration such as that of the present invention, it is possible to display in the same position as the overlapping window a screen of the original window in the superimposed region of the overlapping window and the original window. Even if a link is not present in the original window, it is possible to jump to the website of a link destination because text in which the link is embedded is displayed in the overlapping window.

According to a second aspect of the present invention, there is provided a window display system for displaying a screen in which a link is embedded in text in a superimposed region of an original window in an overlapping window superimposed and displayed on the original window that is displayed on a display device of a user terminal, the window display system characterized in that an overlapping window processor in the user terminal comprises: a text acquisition section for acquiring text of the original window in the superimposed region of the original window and the overlapping window; a text transmitter for transmitting to a predetermined server the acquired text, coordinates of the superimposed region in the overlapping window, and coordinates of each text; and a display processor for receiving a screen generated in the server and displaying the screen in the overlapping window, wherein the server has a dictionary storage section for correlating and storing a preset keyword and a URL of a website in which information related to the keyword is posted; a text receiver for receiving text from the user terminal; and a screen generator for determining whether a keyword stored in the dictionary storage section is contained in the text, extracting the keyword and the URL in the case that the keyword is contained in the text, embedding a link that corresponds to the URL of the link destination in a position of the keyword contained in the text on the basis of the coordinates of the text and the coordinates of the superimposed region received from the user terminal, thereafter generating a screen provided with information that shows the presence of a link, and transmitting the screen to the user terminal.

By using a configuration such as that of the present invention, it is possible to see through the overlapping window to the screen of the original window in the superimposed region of the overlapping window and the original window. A link in a position that corresponds to the text of the original window is embedded in the overlapping winnow. The user selects a link in the overlapping window with the perception of selecting text of the original window because the overlapping window is in a position superimposed on the original window. It is thereby made possible to jump to the website of a link destination even when a link is not present in the original window.

According to a third aspect of the present invention, there is provided a window display system wherein the text acquisition section extracts from the TRAM of the user terminal data to be displayed in the superimposed region of the original window, and acquires text by character recognition of the data.

The VRAM manages and stores which information is to be displayed on the screen. Therefore, data in the superimposed region of the original window is extracted from the VRAM and subjected to character recognition, whereby the text of the original window in position of the superimposed region can be acquired.

According to a fourth aspect of the present invention, there is provided a window display system wherein the screen generator generates a screen in which a background color of the generated screen is set in a transmissive state.

It is preferred that the screen generated in the web server be set in a transmissive state. The user can thereby see the text of the original window through the overlapping window.

According to a fifth aspect of the present invention, there is provided a window display system wherein the screen displayed in the overlapping window is a display format that is different from the display of the link of the original window.

The link set in the overlapping window is different from the link set by the original window. In view of this fact, the link set by the original window and the link newly set by the overlapping window are preferably shown in a display format that allows the difference between the two links to be identified.

According to a sixth aspect of the present invention, there is provided a window display system for displaying a screen in which a link is embedded in information of a range contained in map information in an original window, in an overlapping window superimposed and displayed on the original window that is displayed on a display device of a user terminal, the window display system characterized in that an overlapping window processor in the user terminal comprises: a positional information acquisition section for acquiring positional information that shows the position of map information of the original window in the superimposed region of the original window and the overlapping window; a positional information transmitter for transmitting the acquired positional information to a predetermined server; and a display processor for receiving, from at least the server, information of a range contained in the map information and a URL of the link destination thereof on the basis of the positional information, extracting from a VRAM an image of the original window in the superimposed region to thereby display the image in the superimposed region, of the overlapping window, embedding a link that corresponds to the URL of the link destination in information received from the server and thereafter generating a screen provided with information that shows the presence of a link, and displaying the screen in the overlapping window, wherein the server has a dictionary storage section for correlating and storing information that has been correlated to positional information set in advance, and the URL of the website on which the information is posted; a positional information receiver for receiving positional information from the user terminal; and a link determination section for determining whether positional information in the information stored in the dictionary storage section is contained in a range specified on the basis of the positional information, and extracting and transmitting to the user terminal the information and the URL in the case that the positional information is contained in the range.

By using a configuration such as that of the present invention, it is possible to display in the same position as the overlapping window a screen of the original window in the superimposed region of the overlapping window and the original window. Even if a link is not present in the original window, it is possible to jump to the website of a link destination because information related to the map information displayed in the original window and the link to the web site of the information related to the map information are embedded in the overlapping window.

According to a seventh aspect of the present invention, there is provided a window display system for displaying a screen in which a link is embedded in information of a range contained in map information in an original window, in an overlapping window superimposed and displayed on the original window that is displayed on a display device of a user terminal, the window display system being characterized in that an overlapping window processor in the user terminal comprises: a positional information acquisition section for acquiring positional information that shows the position of map information of the original window in the superimposed region of the original window and the overlapping window; a positional information transmitter for transmitting the acquired positional information to a predetermined server; and a display processor for receiving a screen generated in the server and displaying the screen in the overlapping window, wherein the server has a dictionary storage section for correlating and storing information that has been correlated to positional information set in advance, and the URL of the web site on which the information is posted; a positional information receiver for receiving positional information from the user terminal; and a screen generator for determining whether a positional information in the information stored in the dictionary storage section is contained in a range specified on the basis of the positional information, extracting the information and the URL in the case that the positional information is contained in the range, embedding a link that corresponds to the URL of the link destination in the extracted information, thereafter generating a screen provided with information that shows the presence of a link, and transmitting the screen to the user terminal.

By using a configuration such as that of the present invention, it is possible to see through the overlapping window to the screen of the original window in the superimposed region of the overlapping window and the original window. Information related to the map information displayed in the original window, as well as a link to the website of the information related thereto are embedded in the overlapping window. It is thereby made possible to jump to the website of a link destination even when a link is not present in the original window.

According to an eighth aspect of the present invention, there is provided a window display system wherein the positional information transmitter furthermore transmits coordinates of the superimposed region of the overlapping window to the server; and the screen generator furthermore determines whether positional information of the information stored in the dictionary storage section is contained in a range specified based on the positional information, extracts the information and URL in the case that the positional information is contained in the range, embeds a link that corresponds to the URL of the link destination in the extracted information in a position other than the superimposed region, thereafter generates a screen provided with information that shows the presence of a link, and transmits the screen to the user terminal.

In the invention described above, a URL or another link may be provided in a position that is different from the superimposed region. This is because map information is ordinarily displayed in the superimposed region and there are cases in which the display overlaps and is difficult to see.

According to a ninth aspect of the present invention, there is provided a window display system wherein information correlated with the positional information is information of shops in the positional information.

In accordance with the present invention, information of shops positioned in the range contained in the map information displayed in the original window, and the URL of the link destination of the information can be displayed in the overlapping window.

According to a tenth aspect of the present invention, there is provided a window display system wherein the overlapping window processor furthermore monitors the scroll state of the original window and erases the displayed overlapping window when scrolling has been detected, and redisplays the overlapping window when the scrolling of the original window has been detected to have stopped.

There are cases in which the screen of the original window is scrolled. In such a case, a link or the like that is displayed in the overlapping window becomes offset. As a result, the user cannot accurately select the link, but the problem can be solved by again performing processing for displaying an overlapping window after scrolling has ended.

According to an eleventh aspect of the present invention, there is provided a user terminal in a window display system for displaying a screen in which a link is embedded in text in a superimposed region of an original window in an overlapping window superimposed and displayed on the original window that is displayed on a display device of a user terminal, the user terminal in a window display system **characterized in that** an overlapping window processor in the user terminal comprises: a text acquisition section for acquiring text of the original window in the superimposed region of the original window and the overlapping window; a text transmitter for transmitting the acquired text to a predetermined server; and a display processor for receiving from at least the server a keyword contained in the text and a URL of the link destination thereof, extracting from a VRAM an image of the original window in the superimposed region to thereby display the image in the superimposed region of the overlapping window, embedding a link that corresponds to the URL of the link destination in relation to the portion that corresponds to the keyword in the displayed image and thereafter generating a screen provided with information that shows the presence of a link, and displaying the screen in the overlapping window, wherein the server determines whether the keyword stored in the server in advance is contained in the text on the basis of the text received from the user terminal, and transmits to the user terminal the keyword and the URL that corresponds to the keyword.

The user terminal according to the first aspect can be configured in the manner of the present invention.

According to an twelfth aspect of the present invention, there is provided a user terminal tin a window display system for displaying a screen in which a link is embedded in text in a superimposed region of an original window in an overlapping window superimposed and displayed on the original window that is displayed on a display device of a user terminal, the user terminal in a window display system **characterized in that** an overlapping window processor in the user terminal comprises: a text acquisition section for acquiring text of the original window in the superimposed region of the original window and the overlapping window; and a text transmitter for transmitting to a predetermined server the acquired text, coordinates of the superimposed region in the overlapping window, and coordinates of each text; and a display processor for receiving a screen generated in the server and displaying the screen in the overlapping window, wherein the server determines whether the keyword stored in the server in advance is contained in the text on the basis of the text received from the user terminal, extracts the URL that corresponds to the keyword, embeds a link that corresponds to the URL of the link destination in a position of the keyword contained in the text on the basis of the coordinates of the text and the coordinates of the superimposed region received from the user terminal, thereafter generates a screen provided with information that shows the presence of a link, and transmits the screen to the user terminal.

The user terminal according to the second aspect can be configured in the manner of the present invention.

According to a thirteenth aspect of the present invention, there is provided a user terminal in a window display system for displaying a screen in which a link is embedded in information of a range contained in map information in an original window, in an overlapping window superimposed and displayed on the original window that is displayed on a display device of a user terminal, the user terminal in a window display system characterized in that an overlapping window processor in the user terminal comprises: a positional information acquisition section for acquiring positional information that shows the position of map information of the original window in the superimposed region of the original window and the overlapping window; a positional information transmitter for transmitting the acquired positional information to a predetermined server; and a display processor for receiving, from at least the server, information of a range contained in the map information and a URL of the link destination thereof on the basis of the positional information, extracting from a VRAM an image of the original window in the superimposed region to thereby display the image in the superimposed region of the overlapping window, embedding a link that corresponds to the URL of the link destination in information received from the server and thereafter generating a screen provided with information that shows the presence of a link, and displaying the screen in the overlapping window, wherein the server determines whether positional information of the information stored in the server in advance is contained in a range specified based on the positional information received from the user terminal, extracts the information and URL in the case that the positional information is contained in the range, and transmits the information and URL to the user terminal.

The user terminal according to the sixth aspect can be configured in the manner of the present invention.

According to a fourteenth aspect of the present invention, there is provided a user terminal in a window display system for displaying a screen in which a link is embedded in information of a range contained in map information in an original window, in an overlapping window superimposed and displayed on the original window that is displayed on a display device of a user terminal, the user terminal in a window display system **characterized in that** an overlapping window processor in the user terminal comprises: a positional information acquisition section for acquiring positional information that shows the position of map information of the original window in the superimposed region of the original window and the overlapping window; a positional information transmitter for transmitting the acquired positional information to a predetermined server; and a display processor for receiving a screen generated in the server and displaying the screen in the overlapping window, wherein the server determines whether positional information of the information stored in the server in advance is contained in a range specified based on the positional information received from the user terminal, extracts the information and URL in the case that the positional information is contained in the range, embeds a link that corresponds to the URL of the link destination in the extracted information, thereafter generates a screen provided with information that shows the presence of a link, and transmits the screen to the user terminal.

The user terminal according to the seventh aspect can be configured in the manner of the present invention.

According to a fifteenth aspect of the present invention, there is provided a program for causing a user terminal to function in a window display system for displaying a screen in which a link is embedded in text in a superimposed region of an original window in an overlapping window superimposed and displayed on the original window that is displayed on a display device of a user terminal, the program characterized by causing the user terminal to function as: a text acquisition section for acquiring text of the original window in the superimposed region of the original window and the overlapping window; a text transmitter for transmitting the acquired text to a predetermined server; and a display processor for receiving from at least the server a keyword contained in the text and a URL of the link destination thereof, extracting from a VRAM an image of the original window in the superimposed region to thereby display the image in the superimposed region of the overlapping window, embedding a link that corresponds to the URL of the link destination in relation to the portion that corresponds to the keyword in the displayed image and thereafter generating a screen provided with information that shows the presence of a link, and displaying the screen in the overlapping window, wherein the server determines whether the keyword stored in the server in advance is contained in the text on the basis of the text received from the user terminal, and transmits to the user terminal the keyword and the URL that corresponds to the keyword.

The user terminal according to the eleventh aspect can be implemented by executing the program of the present invention.

According to a sixteenth aspect of the present invention, there is provided a program for causing a user terminal to function in a window display system for displaying a screen in which a link is embedded in text in a superimposed region of an original window in an overlapping window superimposed and displayed on the original window that is displayed on a display device of a user terminal, the program characterized by causing the user terminal to function as: a text acquisition section for acquiring text of the original window in the superimposed region of the original window and the overlapping window; a text transmitter for transmitting to a predetermined server the acquired text, coordinates of the superimposed region in the overlapping window, and coordinates of each text; and a display processor for receiving a screen generated in the server and displaying the screen in the overlapping window, wherein the server determines whether the keyword stored in the server in advance is contained in the text on the basis of the text received from the user terminal, extracts the URL that corresponds to the keyword, embeds a link that corresponds to the URL of the link destination in a position of the keyword contained in the text on the basis of the coordinates of the text and the coordinates of the superimposed region received from the user terminal, thereafter generates a screen provided with information that shows the presence of a link, and transmits the screen to the user terminal.

The user terminal according to the twelfth aspect can be implemented by executing the program of the present invention.

According to a seventeenth aspect of the present invention, there is provided a program for causing a user terminal to function in a window display system for displaying a screen in which a link is embedded in information of a range contained in map information in an original window, in an overlapping window superimposed and displayed on the original window that is displayed on a display device of a user terminal, the program characterized by causing the user terminal to function as: a positional information acquisition section for acquiring positional information that shows the position of map information of the original window in the superimposed region of the original window and the overlapping window; a positional information transmitter for transmitting the acquired positional information to a predetermined server; and a display processor for receiving, from at least the server, information of a range contained in the map information and a URL of the link destination thereof on the basis of the positional information, extracting from a VRAM an image of the original window in the superimposed region to thereby display the image in the superimposed region of the overlapping window, embedding a link that corresponds to the URL of the link destination in information received from the server and thereafter generating a screen provided with information that shows the presence of a link, and displaying the screen in the overlapping window, wherein the server determines whether positional information of the information stored in the server in advance is contained in a range specified based on the positional information received from the user terminal, extracts the information and URL in the case that the positional information is contained in the range, and transmits the information and URL to the user terminal.

The user terminal according to the thirteenth aspect can be implemented by executing the program of the present invention.

According to an eighteenth aspect of the present invention, there is provided a program for causing a user terminal to function in a window display system for displaying a screen in which a link is embedded in information of a range contained in map information in an original window, in an overlapping window superimposed and displayed on the original window that is displayed on a display device of a user terminal, the program characterized by causing the user terminal to function as: a positional information acquisition section for acquiring positional information that shows the position of map information of the original window in the superimposed region of the original window and the overlapping window; a positional information transmitter for transmitting the acquired positional information to a predetermined server; and a display processor for receiving a screen generated in the server and displaying the screen in the overlapping window, wherein the server determines whether positional information of the information stored in the server in advance is contained in a range specified based on the positional information received from the user terminal, extracts the information and URL in the case that the positional information is contained in the range, embeds a link that corresponds to the URL of the link destination in the extracted information, thereafter generates a screen provided with information that shows the presence of a link, and transmits the screen to the user terminal.

The user terminal according to the fourteenth aspect can be implemented by executing the program of the present invention.

### EFFECT OF THE INVENTION

In accordance with the present invention, a website positioned under a window superimposed and displayed over the website can be displayed together with a link. It is possible to display the above-noted link set by a website creator because the link is processed without concern for the link of the website positioned below.

### BRIEF DESCRIPTION OF THE DRAWINGS

FIG. 1 is a conceptual view of the system configuration of example 1;
FIG. 2 is a conceptual view of the hardware configuration;
FIG. 3 is a flowchart for schematically showing an example of the processing in examples 1 and 2;
FIG. 4 is a view showing the coordinates of the overlapping window and the original window;
FIG. 5 is a conceptual view that schematically shows the dictionary storage section 11;
FIG. 6 is a view that schematically shows the overall processing in examples 1 and 2;
FIG. 7 is a view that schematically shows a state in which text is displayed in the original window;
FIG. 8 is a view that schematically shows an overlapping window;
FIG. 9 is a view that schematically shows the state immediately after the overlapping window has been superimposed on the original window;
FIG. 10 is a view that schematically shows the state of the overlapping window for the case in which the processing in example 1 has been carried out;
FIG. 11 is a conceptual view of the system configuration of the case of example 2;
FIG. 12 is a view that schematically shows the overlapping window generated in a web server in example 2;
FIG. 13 is a conceptual view of the system configuration of the case of example 3;
FIG. 14 is a flowchart for schematically showing an example of the processing in examples 3 and 4;
FIG. 15 is a view that schematically shows a state in which map information is displayed in the original window.
FIG. 16 is a view that schematically shows a state immediately after the overlapping window has been superimposed on the original window;
FIG. 17 is a view that schematically shows the state of the overlapping window for the case that the processing in example 3 has been carried out;
FIG. 18 is a conceptual view of the system configuration of the case of example 4;
FIG. 19 is a view that schematically shows the overlapping window generated in a web server in example 4;
FIG. 20 is a view that schematically shows the state of the overlapping window for the case that the processing in example has been carried out; and
FIG. 21 is a view that schematically shows the state of the overlapping window for the case that the processing in example 2 has been carried out.

### DESCRIPTION OF THE NUMERICAL SYMBOLS

- 1:: Window Display System
- 2:: User Terminal
- 3:: Web Server
- 4:: Overlapping Window Processor
- 5:: Text Acquisition Section
- 6:: Text Transmitter
- 7:: Display Processor
- 8:: Scroll Processor
- 9:: Text Receiver
- 10:: Link Determination Section
- 11:: Dictionary Storage Section
- 12:: Screen Generator
- 13:: Positional information Acquisition Section
- 14:: Positional information Transmitter
- 15:: Positional information Receiver

### BEST MODE FOR CARRYING OUT THE INVENTION

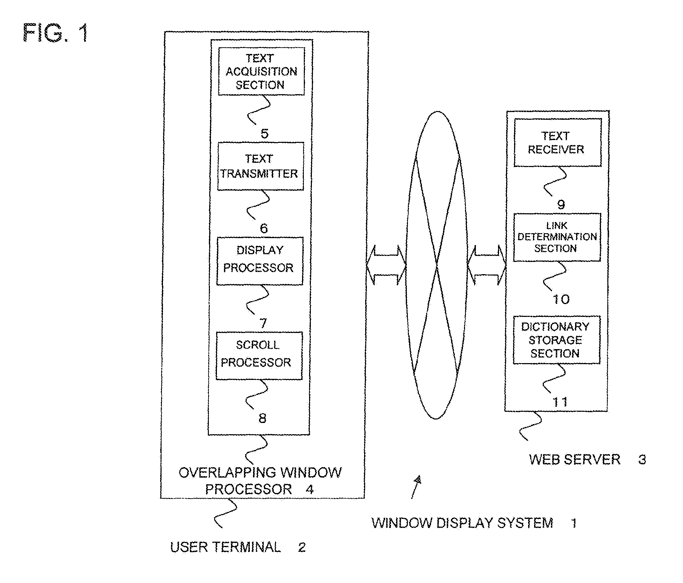

FIG. 1 is a conceptual view of the system configuration of the window display system 1 of the present invention. The window display system 1 has various functions in a web server 3, and various functions in a user terminal 2.

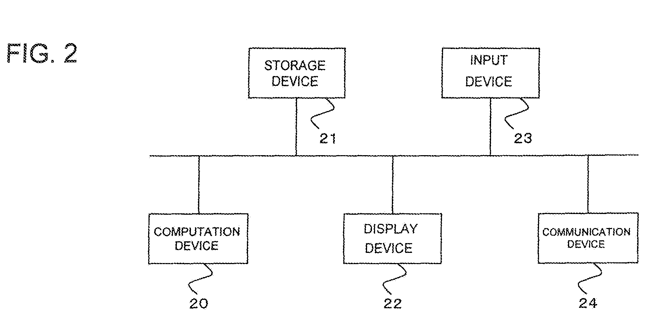

FIG. 2 shows a schematic example of the hardware configuration in the user terminal 2. The user terminal 2 for implementing the window display system 1. of the present invention has a CPU or another computation device for executing computation processing of a program; a RAM, hard disk, or another storage device for storing information; a display or another display apparatus; a keyboard, mouse, numerical keypad, or another input device; and a communication device for transceiving information via the Internee, LAN, or another network. Each function (each means) implemented in the computer is executed via processing by reading the means (program, module, or the like) for executing the processing into the computation device. In the case that each function uses information stored in the storage device in processing of the functions, the information is read from the storage device and the information thus read is used as needed in the processing carried out in the computation device. The web server 3 for implementing the window display system 1 of the present invention is provided with at least the computation device, the storage device, and the communication device.

The function of each means in the present invention is only theoretically distinguished, and may physically or in reality constitute the same area. It is also apparent that a data file may be used instead of a database, and descriptions involving a database include a data file.

The user terminal 2 is provided with an overlapping window processor 4 for executing processing in the user terminal 2 of the present invention. The overlapping window processor 4 executes processing related to an overlapping window, which is a window that is superimposed and displayed on a window for displaying a website that is displayed on the screen of the user terminal 2. The window positioned below the overlapping window is referred to as the "original window."

The overlapping window processor 4 has a text acquisition section 5, a text transmitter 6, a display processor 7, and a scroll processor 8.

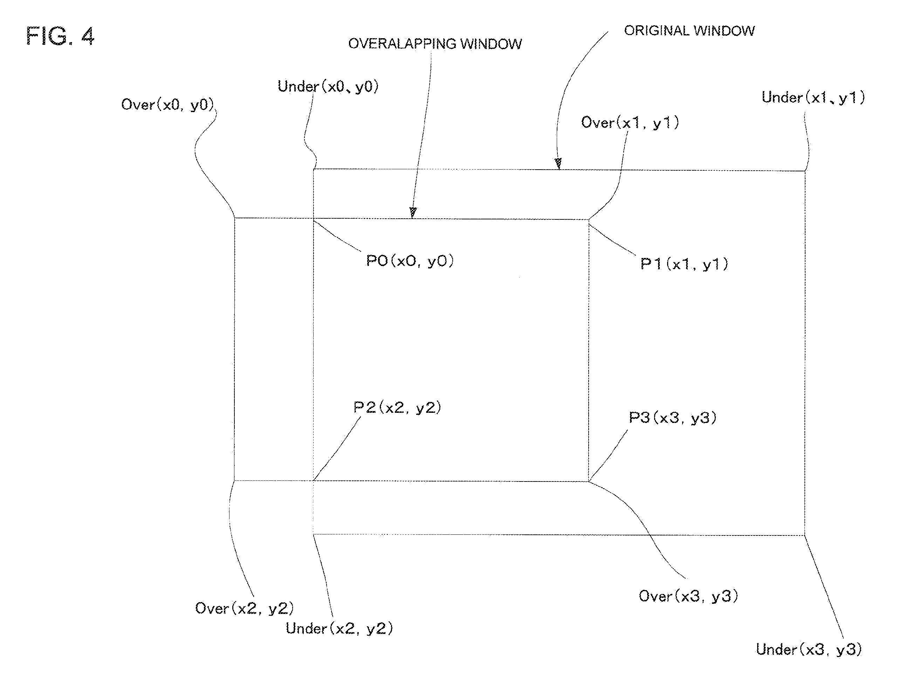

The text acquisition section 5 acquires text information displayed in the region of the overlapping window superimposed on the original window. When the acquisition occurs, the coordinates (coordinates P0, P1, P2, P3) of the region superimposed by the overlapping window and the original window are acquired, as shown in FIG. 4, and the text of the superimposed region constituted by the coordinates is acquired.

The text transmitter 6 sends to the web server 3 text in the original window in the superimposed region acquired by the text acquisition section 5. The web server 3 in the window display system 1 of the present invention is preferably different from the web server 3 of the website displaying the original window, but the web servers may be the same.

The display processor 7 displays in the overlapping window the screen of the website displayed in the overlapping window acquired from the web server 3. For example, the superimposed region displays in the overlapping window the screen of the website received from the web server 3. The screen of the website displayed in the overlapping window at this time is a screen generated by the user terminal 2 or the screen generated by the web server 3 of the present invention, and the text in the superimposed region is a screen with an embedded link in the case that information or the like of the link exists in the web server 3. In the case that the background display of the overlapping window is in a transmissive state (a state in which the background is transparent to semitransparent. A transmissive state may be a state in which the screen of the original window can be seen through the overlapping window.), the information may be only information indicating a link (underlining, a predetermined mark, or the like).

The scroll processor 8 monitors the scroll state of the original window and erases the overlapping window when the original window is detected to have been scrolled. Processing is carried out in the text acquisition section 5, the text transmitter 6, and the display processor 7 in the case that scrolling is again detected to have stopped, and the overlapping window is displayed in the scrolled position.

The web server 3 has a text receiver 9, a link determination section 10, and a dictionary storage section 11.

The text receiver 9 receives from the user terminal 2 text displayed in the superimposed region of the overlapping window and the original window.

The link determination section 10 determines whether the same or similar text as the keyword stored in the dictionary storage section 11 (described later) is contained in the text receiver 9 that was received from the user terminal 2, and the URL of the link destination is extracted when such is the case.

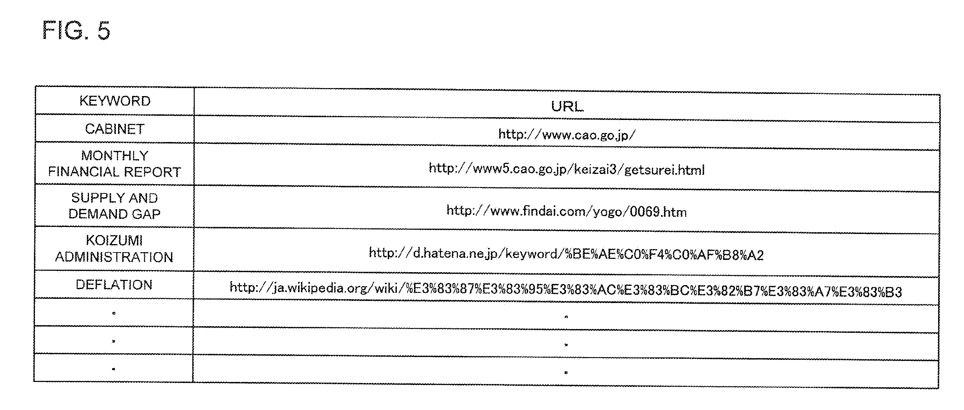

The dictionary storage section 11 is a database in which the keyword and the URL of the link destination of the keyword are correlated and stored. FIG. 5 schematically shows an example of the dictionary storage section 11. Keywords include a general term and a URL of a website that corresponds to the general term (dictionary mode), a general term and a URL showing the translation of a different language that corresponds to the general term (translation mode) a place name or term related to positional information and a URL of the map that corresponds to the place name or term (e.g., in the case that the place name is "prime minister's official residence, and the URL or the like of a map of the vicinity of the prime minister's official residence) (location mode). The above modes can be switched by a user setting.

### [Example 1]

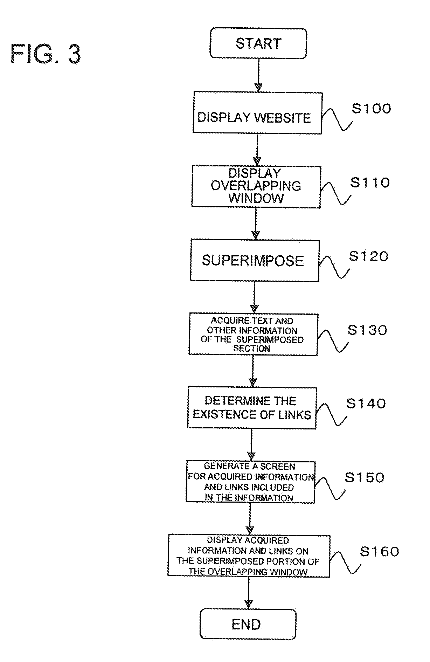

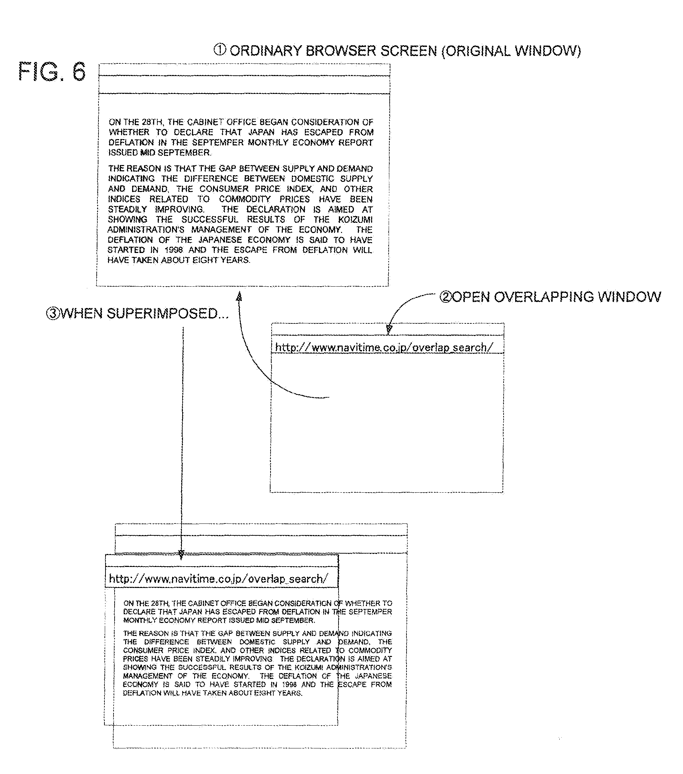

First, processing for the case in which a general news article or the like is displayed in the original window in the window display system 1 of the present invention will be described with reference to the or FIG. 3 and the conceptual view of FIG. 1. FIG. 6 shows an overall conceptual view.

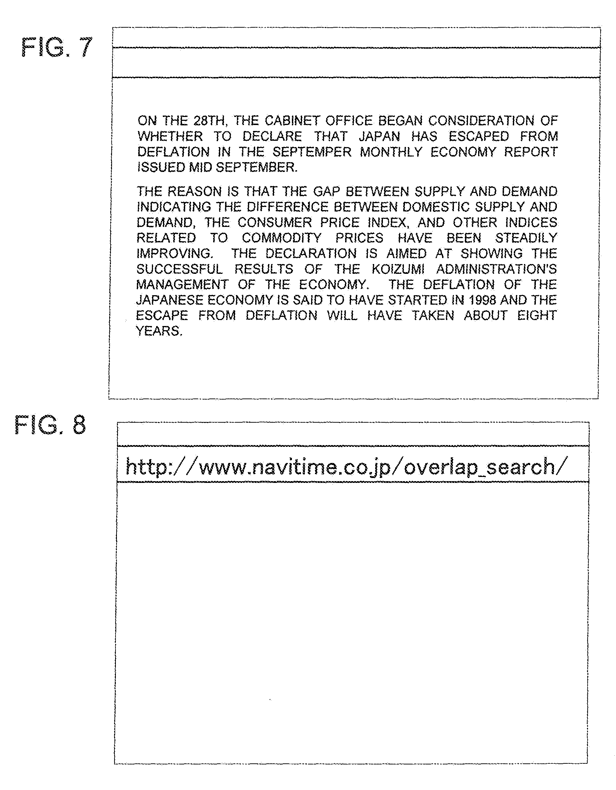

First, the user performs a predetermined operation using the user terminal 2 to cause a window (which will be the original window) to be displayed on the screen. A website is accessed from the window via the Internet, for example. A screen containing a news article is displayed in the window, as shown in FIG. 7 (S100).

For example, links or the like are embedded in the text of the news article displayed in Fig. 7. Next, the user must open a separate window and perform a search using a search site or the like when the user desires to know information related to the "Cabinet Office," a "Monthly Economy Report," or the like. In view of this situation, in the present invention, the user does not open such a search site, but rasher an overlapping window is displayed on the screen of the user terminal 2 (S110) when a predetermined operation is performed, or at the same time that the original window is opened. An example of the overlapping window displayed in this case is shown in FIG. 8.

The overlapping window is dragged and superimposed on the original window displayed in this manner (S120). Next, the text acquisition section 5 of the overlapping window processor 4 acquires the text in the superimposed region of the original window (S130).

In other words, in the overlapping window processor 4, the coordinates of the overlapping window and other windows are detected constantly or at predetermined timing (the coordinates of each window can be acquired from the OS), and when it has been determined that overlap has occurred, the coordinates of the superimposed region are calculated. In the example of superimposition of FIG. 4, four coordinate points (Under (x0, y0), Under (x1, y1), Under (x2, y2), Under (x3, y3)) of the original window and four coordinate points (Over (x0, y0), Over (x1, y1), Over (x2, y2, Over (x3, y3)) of the overlapping window are detected, and when superimposition has been detected, the four coordinates ((P0 (x0, y0), P1 (x1, y1), P2 (x2, y2), P3 (x3, y3)) constituting the superimposed region are calculated.

The superimposed region composed of the four coordinates calculated in this manner is obtained by extracting the information of the display screen in the original window from the VRAM. In other words, the information of the display screen of the region composed of P0 to P4 in the original window is extracted from the VRAM of the user terminal 2. The text in the superimposed region is acquired by performing character recognition on the basis of the information extracted from the VRAM (S130).

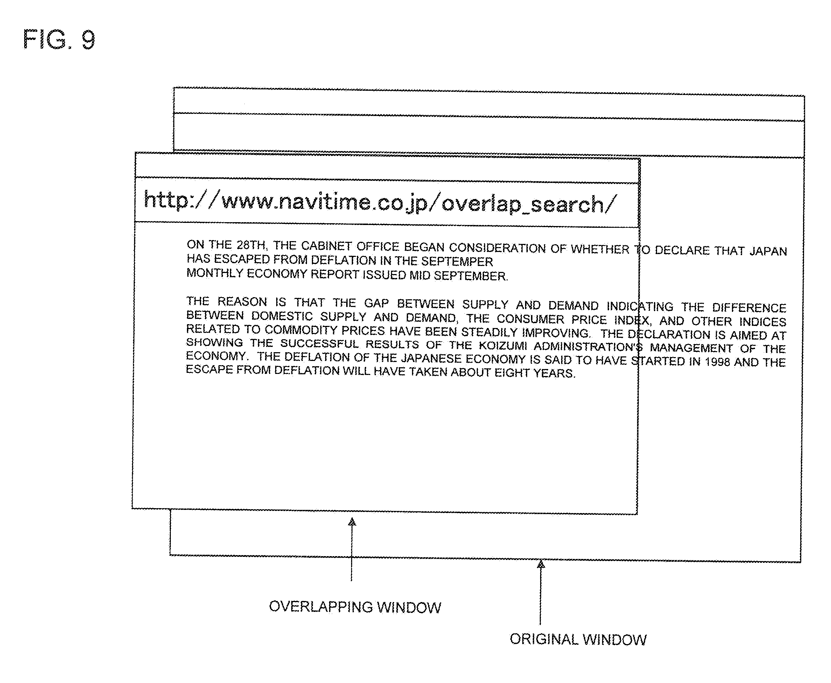

FIG. 9 shows the state immediately after the overlapping window has been superimposed on the original window. Therefore, the text acquisition section 5 extracts the image in the superimposed region from the VRAM, and acquires the text (in the case of FIG. 9, "On the 28th, the Cabinet Office ... September Monthly Economy Report issued mid September," "began consideration," "the gap between supply and demand indicating the difference between domestic supply and demand, the consumer price," "index have been steadily improving successful results of the Koizumi Administration's management of the economy," and "The deflation of the Japanese economy is said to have started in 1998, and the escape ... about eight years.") in the region from the image.

The text transmitter 6 transfers the text in the superimposed region acquired in this manner to the web server 3 via a network. The text is received in the text receiver 9 of the web server 3, and the link determination section 10 uses the text thus received to determine whether link information that corresponds to the dictionary storage section 11 is contained in the terms that are contained in the text (S140).

The keywords "Cabinet Office," a "Monthly Economy Retort, "gap between supply and demand," "Koizumi Administration," and are contained in the above-described extracted text in the case the dictionary storage section 11 is configured in the manner shown in FIG. 5. Therefore, the link determination section 10 extracts from the dictionary storage section 11 the URLs of the link destinations of the keywords and sends the information to the user terminal 2.

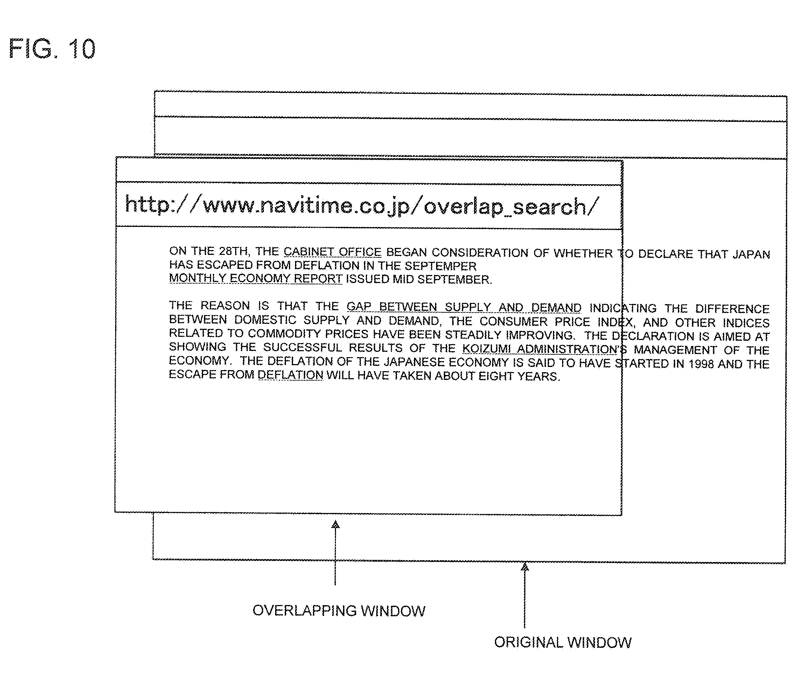

The overlapping window processor 4 of the user terminal 2, which has received the text existing as keywords and the URLs of the link destinations, first draws an image of the superimposed region in the original window extracted from the VRAM in the superimposed region of, i.e., in the same position as the overlapping window. The text in the superimposed region is recognized by subjecting the image drawn in the stated position to character recognition. The URLs of the link destinations are attached as a link (S150, S160) in the positions of the text, which the display processor 7 received from the web server 3 and in which the keywords are present. The URLs of the link destinations are attached as links by, e.g., underlining or marking the drawn portion of the text. FIG. 10 shows a state in which links have been embedded in the text and are underlined as information showing links.

In this manner, the same information as the original window is displayed in the overlapping window in relation to the portion of the superimposed, region of the overlapping window and the original window, and a screen is shown in which the links have also been embedded. The region outside of the superimposed region of the overlapping window can be displayed in any manner, and is preferably a screen in which the background color is set to a transmissive state.

Since the same information as that in the original window is displayed in the superimposed region of the overlapping window, the user may not be aware of the existence of the overlapping window. In such a case, the original window may be scrolled.

In anticipation of such an event, the scroll processor 8 of the overlapping window processor 4 monitors the scrolling of the original window, and when the original window is detected to have been scrolled (e.g., when the vertical or horizontal bar have been detected to have moved in the vertical direction), the overlapping window displayed by the display processor 7 is erased from the display screen, the overlapping window is displayed again in the same position after scrolling, and the processing of S130 and thereafter is carried out. The original window after scrolling is thereby displayed in the same manner as the overlapping window.

### [Example 2]

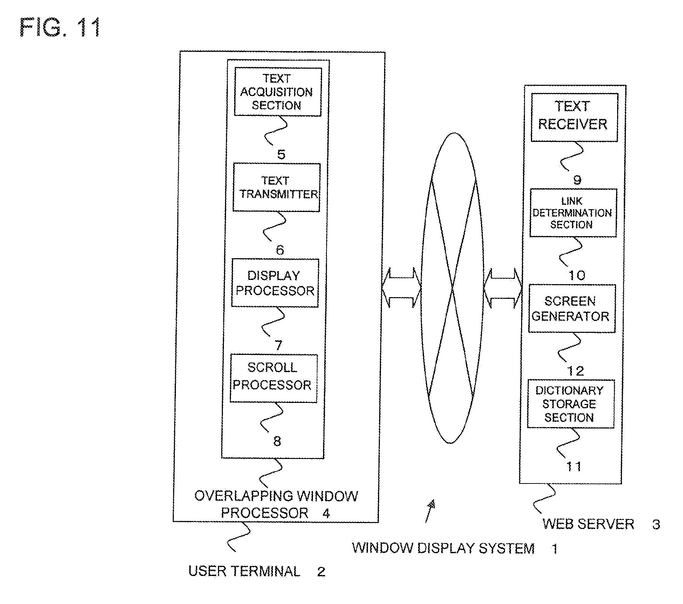

In the example described above, processing was carried out by displaying the image of the original window in the superimposed region in the position of the superimposed region of the overlapping window, and performing processing for attaching a link to the image, but the screen to be displayed in the overlapping window may be generated in the web server 3. FIG. 11 shows a conceptual view of the system configuration in such a case.

In the web server 3 of FIG. 11, a screen generator 12 is furthermore provided in addition to the configuration of the web server 3 of FIG. 1.

The screen generator 12 generates a screen that is displayed in the overlapping window of the user terminal 2. The screen includes information showing the links in the superimposed region and the URLs of the link destinations of the information. The background color of the screen displayed in this case is preferably set to a transmissive state.

An example of the processing for the present example is described below. In the present example as well, the case in which a general news article or the like is displayed in the original window will be described.

The processing from S100 to S130 is the same as example 1 and a description is omitted. In other words, the text in the superimposed region is acquired by extracting from the TRAM the region in which the overlapping window is superimposed on the original window and subjecting the region to character recognition. The text is then sent to the web server 3 for overlapping window. The relative coordinates (the coordinates P0 to P4 in the overlapping window in FIG. 4) of the superimposed region in the overlapping window and the relative coordinates (the coordinates of the text in the superimposed region in the overlapping window) of each part of the text are sent.

When the text of the superimposed region of the overlapping window is received from the user terminal 2 into the text receiver 9 of the web server 3, the link determination section 10 determines whether the information of a link that corresponds to the dictionary storage section 11 is included in the text thus received, from among the terms contained in the text (S140).

The keywords "Cabinet Office," "Monthly Economy Report," "gap between supply and demand," "Koizumi Administration," and "deflation," are contained in the above-described extracted text in the case the dictionary storage section 11 is configured in the manner shown in FIG. 5. Therefore, the link determination section 10 extracts from the dictionary storage section 11 the URLs of the link destinations of the keywords.

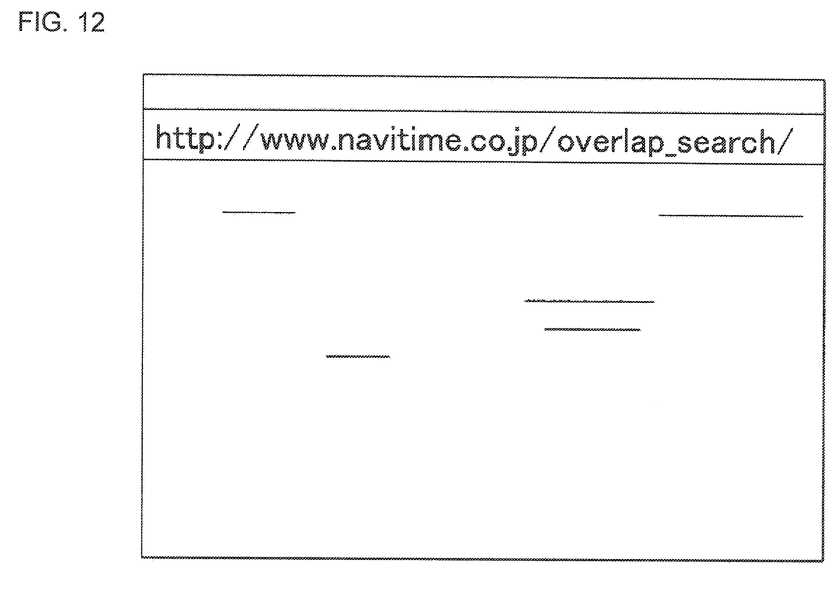

When the link determination section 10 extracts an item contained as a keyword in the text and the URL of the link destination of the item, the screen generator 12 sets the background color of the screen of the overlapping window to a transmissive state ("#ffffff" or the like), and generates a screen containing the superimposed region of the overlapping window. In this screen, the coordinates in the superimposed region of the overlapping window and the coordinates of the text in the superimposed region are received from the user terminal 2. Therefore, a screen is generated in a format (e.g., underlining, marking, or the like in the position of the text) in which a link is embedded in the coordinate position of the keyword. An example of a screen displayed in the overlapping window in such a state is shown in FIG. 12.

In other words, in the screen of FIG. 12, the background color is set to a transmissive state, and information (underlining, marking, or the like) showing the presence of a link in relation to the keywords contained in the text of the superimposed region and stored in the dictionary storage section 11 are generated, and a screen displayed in the position of the keywords contained in the text is generated as a screen of the overlapping window on the basis of the relative coordinates of each part of the text received from the user terminal 2. For this reason, in FIG. 12, a screen is generated (S150) in which underlining is provided that shows the presence of a link in the text positions of the keywords "Cabinet Office," "Monthly Economy Report," "gap between supply and demand," "Koizumi Administration," and "deflation."

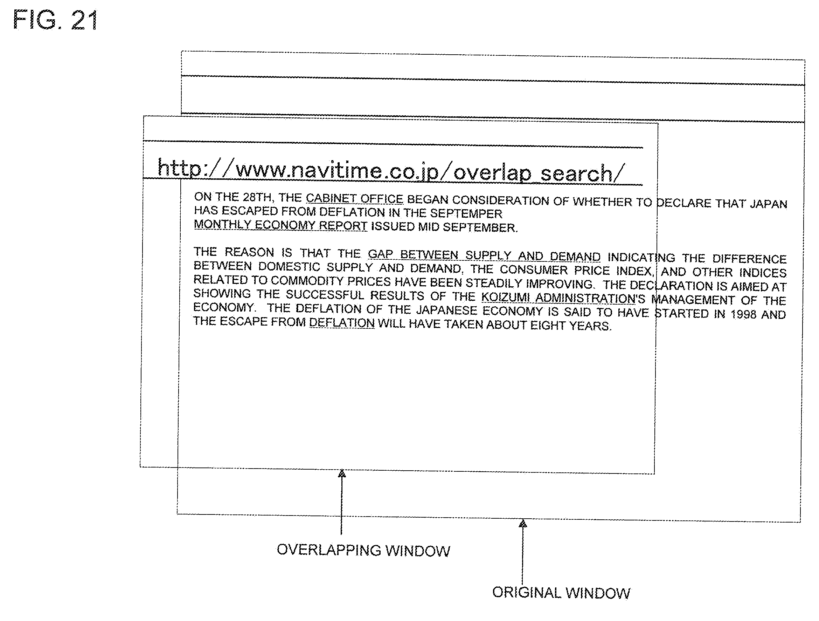

The screen generated in the screen generator 12 in this manner is transmitted from the web server 3 to the user terminal 2. The screen is received in the display processor 7 of the overlapping window processor 4 and displayed in the overlapping window (S160). Information indicating the presence of a link is thereby displayed in the overlapping window, and the user can see that the text as such belongs to the original window through the overlapping window. Information (e.g., underlining) showing the presence of a link is shown in a position that corresponds to the text of the original window, because the coordinates of the superimposed region of the overlapping window and the original window are acquired, the relative coordinates of the superimposed region and the relative coordinates of the text displayed in the superimposed region in the overlapping window are acquired in web server 3, and a screen provided with information showing the presence of a link in a corresponding position is generated. This state is the state shown in FIG. 21.

The processing in the scroll processor 8 when the original window has been scrolled can be carried out in the same manner as example 1 and the processing of the overlapping window in example 2 can be carried out in the same manner.

In examples 1 and 2, it is possible to use different colors or expressive formatting (if underlining is used in the original window, marking is used in the overlapping window, or other formatting) for information showing a link in the overlapping window and information showing a link in the original window in order to distinguish between the information showing a link in the original window and information, showing a link in the overlapping window.

### [Example 3]

Next, the case in which the information displayed in the original window is not a news article or other text information, but is rather map information

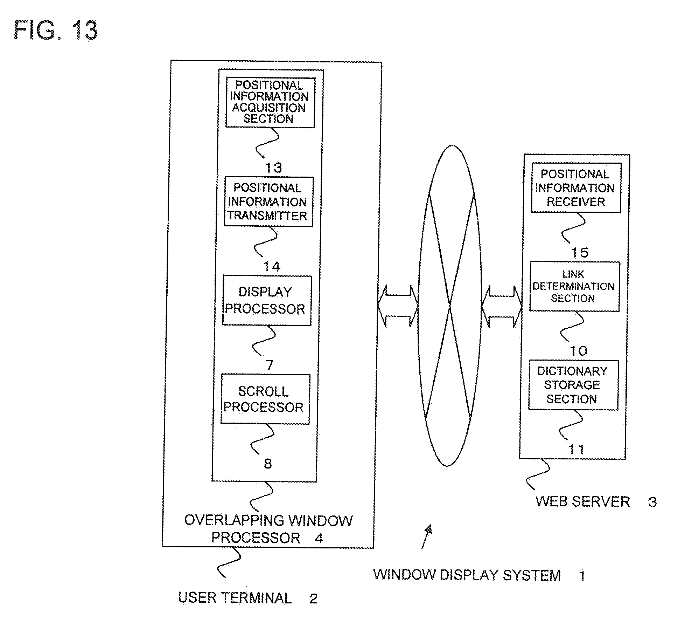

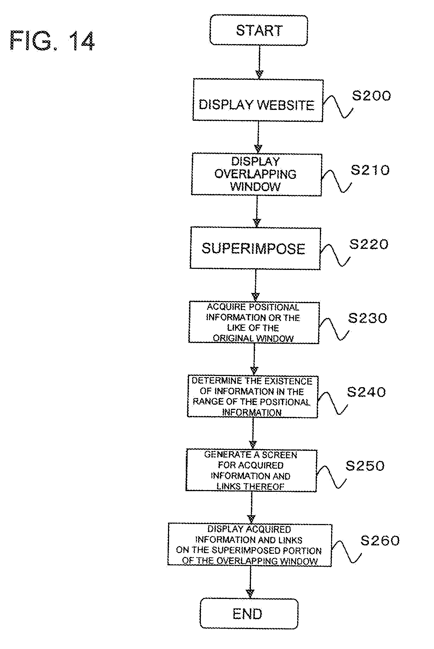

FIG. 13 is a conceptual view of the system configuration of the window display system 1 of the present example, and FIG. 14 shows an example of the processing.

In the overlapping window processor 4 of the user terminal 2 of the present example, a positional information acquisition section 13 and a positional information transmitter 14 are provided in place of the text acquisition section 5 and text transmitter 6 of examples 1 and 2; and a positional information acquisition section 15 is provided in place of the text receiver 9 in the web server 3.

The positional information acquisition section 13 acquires positional information, scale, and other information of the center position of the map information shown in the original window.

The positional information transmitter 14 presents to the web server 3 the positional information, scale, and other information thus acquired in the positional information acquisition section 13.

The positional information acquisition section 15 receives the positional information, scale, and other information in the original window that has been sent from the user terminal 2.

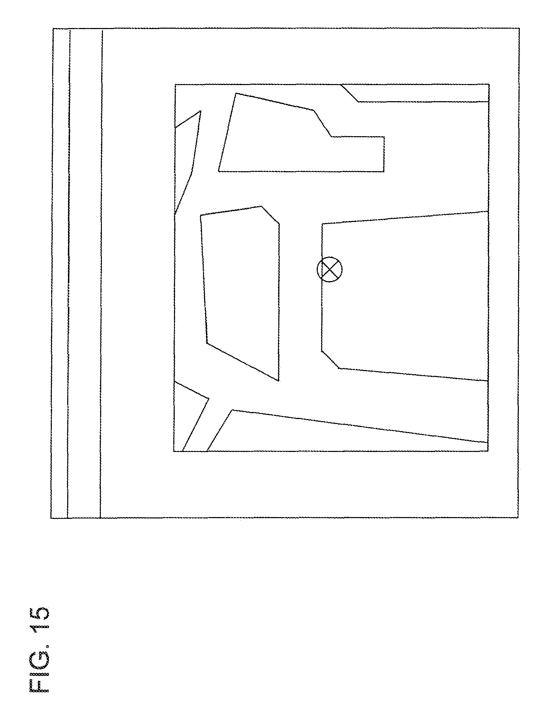

The screen displayed in the original window is assumed to be that shown in FIG. 15. The portion indicated by × in the screen of FIG. 15 is the center point on the map.

First, map information such as that shown in FIG. 15 is displayed in the original window by performing a predetermined operation from the user terminal 2 (S200).

An overlapping window is displayed on the screen of the user terminal 2 (S210) when the user performs a predetermined operation using the user terminal 2, or at the same time that the original window is opened. An example of the overlapping window displayed in this case may be the same as that of FIG. 8.

The overlapping window is dragged and superimposed on the original window displayed in this manner (S220). Next, positional information acquisition section 13 of the overlapping window processor 4 acquires the positional information of the map information displayed in the original window (S230). The positional information acquired at this time may be the latitude and longitude or other positional information of the center position in the map information, or the scale or other information. The positional information can be acquired from a parameter or the like in the URL of the original window. The coordinates (P0 (x0, y0), P1 (x1, y1), P2 (x2, y2), P3 (x3, y3)) of the superimposed region of the overlapping window and the original window are calculated in the same manner as that of examples 1 and 2.

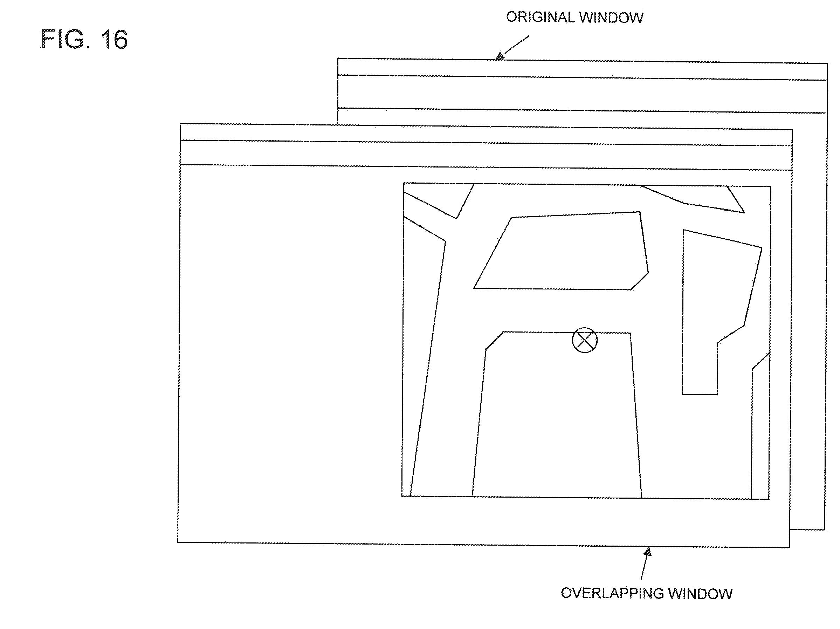

FIG. 16 shows a state immediately after the overlapping window has been superimposed on the original window. The positional information, scale, and other information in the map information of the original window acquired in this manner are presented to the web server 3.

When the information has been received in the positional information acquisition section 15 of the web server 3, the range of the map information displayed in the original window is made apparent from the positional information, scale, and other information. Therefore, the link determination section 10 searches for whether information stored in the dictionary storage section 11 is present in the range, and when such information is present, the URL of the link destination is extracted (S240). In other words, the dictionary storage section 11 is searched as to whether shops, place names, and other information are present in the range, and extraction is carried out when such information is present.

For example, when information of "Store A," "Store B," and "Store C" is present in the dictionary storage section 11 in the range of the map information in FIG. 15, the URLs of the link destinations of "Store A," "Store B," and "Store C," the information of the stores (e.g., the shop names, or the like), and icons showing the types of information (e.g., a restaurant icon in the case of a restaurant, a bookstore icon in the case of a bookstore, an entertainment facility icon in the case of an entertainment facility, and the like) are extracted.

The information is then transmitted from the web server 3 to the user terminal 2.

In the case described above, the shop names "Store A," "Store B," and "Store C," the URLs of the link destinations, the icons, and the like are sent from the web server 3 to the user terminal 2.

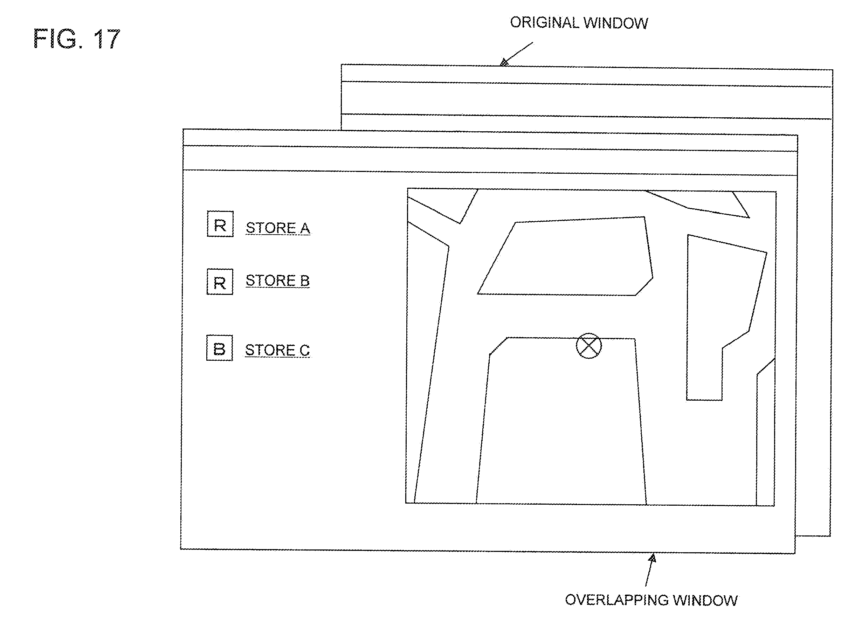

Information sent from the web server 3 is received in the overlapping window processor 4 of the user terminal 2, and the display processor 7 of the overlapping window processor 4 draws an image of the superimposed region, in the original window extracted from the VRAM in the same position as the overlapping window (S250). The shop names "Store A," "Store B," and "Store C," information showing the presence of a link, the icons, and other information received from the web server 3 are displayed (S260) in the other portions of the overlapping window (preferably, regions other than the superimposed region). FIG. 17 is a schematic view of such a state. Icons indicating restaurants are displayed to the side of "Store A" and "Store B" in FIG. 17, and an icon indicating a bookstore is displayed to the side of "Store C." The shop name is displayed with an underline in order to show that a link is embedded. The icons, shop names, and the like may be shown on the map information.

The same information as in the original window is thereby displayed in the overlapping window in relation to the portions of the superimposed region of the overlapping window and the original window, and a screen embedded with links is also displayed.

Since the same information as in the original window is displayed in the superimposed region of the overlapping window, the user may not be aware of the existence of the overlapping window. In such a case, the original window may be scrolled.

In anticipation of such an event, the scroll processor 8 of the overlapping window processor 4 monitors the scrolling of the original window, and when the original window is detected to have been scrolled (e.g., when the vertical or horizontal bar of the window has been detected to have moved in the vertical direction), the overlapping window displayed by the display processor 7 is erased from the display screen, the overlapping window is displayed again in the same position after scrolling, and the processing of S230 and thereafter is carried out. The original window after scrolling is thereby displayed in the same manner as the overlapping window.

### [Example 4]

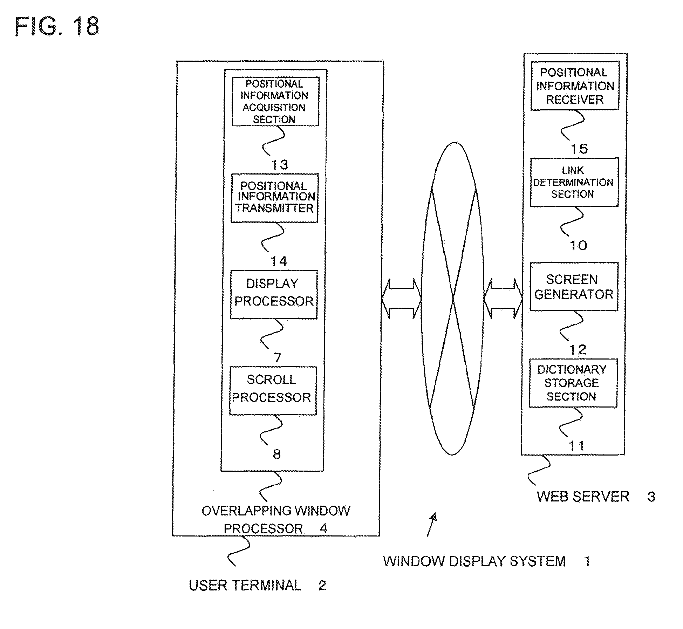

The processing of example 3 is carried out in the same manner as example 1 in that the superimposed region of the overlapping window is extracted as an image from the VRAM, and is drawn in the overlapping window. However, it is also possible to use a configuration in which a screen with the overlapping window set in a transmissive state is generated, in the same manner as example 2. Such a case will be described. The window display system 1 of such a case is furthermore provided with a screen generator 12 in the configuration of example 3, as shown in FIG. 18.

The processing from S200 to S230 is the same as example 3 and a description is omitted. In other words, the overlapping window acquires positional information (preferably, positional information of the center position), scale information, and other information of the map information shown in the original window, and provides the information to the web server 3. In such a case, the relative coordinates (P0 to P4 in FIG. 4) of the superimposed region in the overlapping window are sent.

When the information is received in the positional information acquisition section 1.5 of the web server 3, the range of the map information displayed in the original window is made apparent from the positional information, scale, and other information. Therefore, the link determination section 10 searches for whether information stored in the dictionary storage section 11 is present in the range, and when such information is present, the URL of the link destination is extracted (S240).

For example, when information of "Store A," "Store B," and "Store C" is present in the dictionary storage section 11 in the range of the map information in FIG. 15, the URLs of the link destinations of "Store A," "Store B," and "Store C," the information of the stores (e.g., the shop names, or the like), and icons showing the types of information (e.g., a restaurant icon in the case of a restaurant, a bookstore icon in the case of a bookstore, an entertainment facility icon in the case of an entertainment facility, and the like) are extracted.

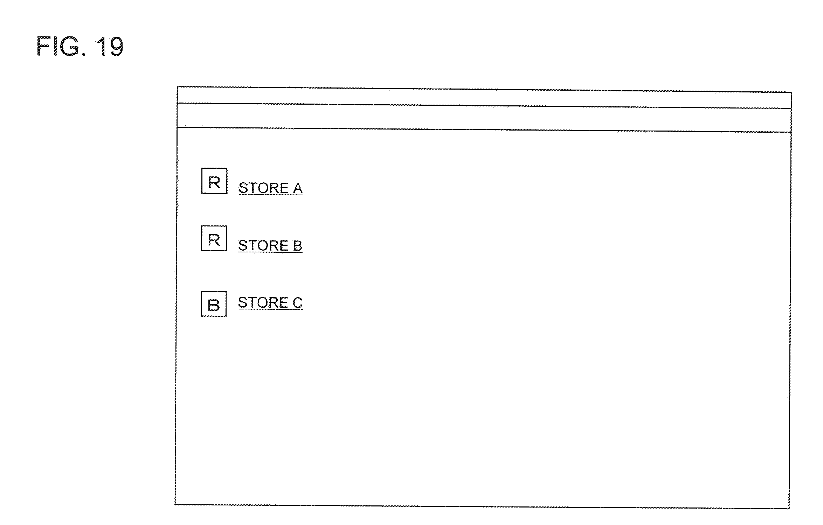

The information is displayed in a location other than the superimposed region, the background color is set to a transmissive state, and the screen to be displayed in the overlapping window is generated. First, the background color is set to a transmissive state. Next, a screen is generated (S250) in which the shop names "Store A," "Store B," and "Store C," information showing the presence of a link, and icons and other information extracted in the link determination section 10 are displayed in a region other than the superimposed region in the overlapping window. In other words, a screen such as that shown in FIG. 19 is generated.

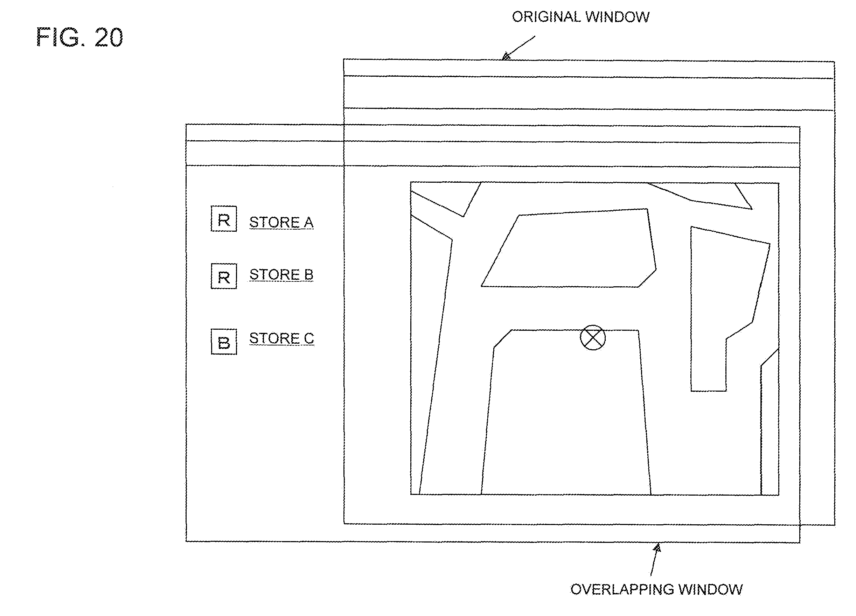

The information of the screen generated in the screen generator 12 in this manner is transmitted from the web server 3 to the user terminal 2. The information of the screen is received in the display processor 7 of the overlapping window processor 4 and the overlapping window is displayed (S260). Shop names and other information present in the map information displayed in the original window and information showing the presence of a link are thereby displayed together in the overlapping window, and the user can see that the map information as such belongs to the original window through the overlapping window. Such a state is shown in FIG. 20.

Since the superimposed region of the overlapping window is transparent or substantially transparent, the user may not be aware of the existence of the overlapping window. In such a case, the original window may be scrolled.

In anticipation of such an event, the scroll processor 8 of the overlapping window processor 4 monitors the scrolling of the original window, and when the original window is detected to have been scrolled (e.g., when the vertical or horizontal bar of the window have been detected to have moved in the vertical direction), the overlapping window displayed by the display processor 7 is erased from the display screen, the overlapping window is displayed again in the same position after scrolling, and the processing of S230 and thereafter is carried out. The original window after scrolling is thereby displayed in the same manner as the overlapping window.

### INDUSTRIAL APPLICABILITY

In accordance with the present invention, a website positioned under a window (overlapping window) superimposed and displayed over the website can be displayed together with a link. It is possible to display the above-noted link set by a website creator because the link is processed without concern for the link of the website positioned below.

## Claims

1. A window display system for displaying a screen in which a link is embedded in text in a superimposed region of an original window in an overlapping window superimposed and displayed on the original window that is displayed on a display device of a user terminal, the window display system **characterized in that** an overlapping window processor in the user terminal comprises:
a text acquisition section for acquiring text of the original window in the superimposed region of the original window and the overlapping window;
a text transmitter for transmitting the acquired text to a predetermined server; and
a display processor for receiving from at least the server a keyword contained in the text and a URL of the link destination thereof, extracting from a VRAM an image of the original window in the superimposed region to thereby display the image in the superimposed region of the overlapping window, embedding a link that corresponds to the of the link destination in relation to the portion that corresponds to the keyword in the displayed image and thereafter generating a screen provided with information that shows the presence of a link, and displaying the screen in the overlapping window, wherein
the server has:
a dictionary storage section for correlating and storing a preset keyword and a URL of a website in which information related to the keyword is posted;
a text receiver for receiving text from the user terminal; and
a link determination section for determining whether a keyword stored in the dictionary storage section is contained in the text, and extracting and transmitting to the user terminal keywords and the URAL in the case that the keyword is contained in the text.

2. A window display system for displaying a screen in which a link is embedded in text in a superimposed region of an original window in an overlapping window superimposed and displayed on the original window that is displayed on a display device of a user terminal; the window display system **characterized in that** an overlapping window processor in the user terminal comprises:
a text acquisition section for acquiring text of the original window in the superimposed region of the original window and the overlapping window;
a text transmitter for transmitting to a predetermined server the acquired text, coordinates of the superimposed region in the overlapping window, and coordinates of each text; and
a display processor for receiving a screen generated in the server and displaying the screen in the overlapping window, wherein
the server has:
a dictionary storage section for correlating and storing a preset keywords and a URL of a website in which information related to the keyword is posted;
a text receiver for receiving text from the user terminal; and
a screen generator for determining whether a keyword stored in the dictionary storage section is contained in the text, extracting the keyword and the URL in the case that the keyword is contained in the text, embedding a link that corresponds to the URL or the link destination in a position of the keyword contained in the text on the basis of the coordinates of the text and the coordinates of the superimposed region received from the user terminal, thereafter generating a screen provided with information that shows the presence of a link, and transmitting the screen to the user terminal.

3. The window display system according to claim 1 or 2, **characterized in that:**
the text acquisition section extracts from the VRAM of the user terminal data to be displayed in the superimposed region of the original window, and acquires text by character recognition of the data.

4. The window display system according to any of claims 1 to 3, **characterized in that:**
the screen generator generates a screen in which a background color of the generated, screen is set in a transmissive state.

5. The window display system according to any of claims 1 to 4, **characterized in that:**
the screen displayed in the overlapping window is a display format that is different from the display of the link of the window.

6. A window display system, for displaying a screen in which a link is embedded in information of a range contained in map information in an original window, in an overlapping window superimposed and displayed on the original window that is displayed on a display device of a user terminal, the window display system **characterized in that** an overlapping window processor in the user terminal comprises:
a positional information acquisition section for acquiring positional information that shows the position of map information of the original window in the superimposed region of the original window and the overlapping window;
a positional information transmitter for transmitting the acquired positional information to a predetermined server; and
a display processor for receiving, from at least the server, information of a range contained in the map information and a URL of the link destination thereof on the basis of the positional information, extracting from a VRAM an image of the original window in the superimposed region to thereby display the image in the superimposed region of the overlapping window, embedding a link that corresponds to the URAL of the link destination in information received from the server and thereafter generating a screen provided with information that shows the presence of a link, and displaying the screen in the overlapping window, wherein
the server has:
a dictionary storage section for correlating and storing information that has been correlated to positional information set in advance, and the URL of the website on which the information is posted;
a positional information receiver for receiving positional information from the user terminal; and
a link determination section for determining whether positional information in the information stored in the dictionary storage section is contained in a range specified on the basis of the positional information, and extracting and transmitting to the user terminal the information and the URL in the case that the positional information is contained in the range.

7. A window display system for displaying a screen in which a link is embedded in information of a range contained in map information in an original window, in an overlapping window superimposed and displayed on the original window that is displayed on a display device of a user terminal, the window display system **characterized in that** an overlapping window processor in the user terminal comprises:
a positional information acquisition section for acquiring positional information that shows the position of map information of the original window in the superimposed region of the original window and the overlapping window;
a positional information transmitter for transmitting the acquired positional information to a predetermined server;
a display processor for receiving a screen generated in the server and displaying the screen in the overlapping window, wherein
the server has:
a dictionary storage section for correlating and storing information that has been correlated to positional information set in advance, and the URL of the website on which the information is posted;
a positional information receiver for receiving positional information from the user terminal; and
a screen generator for determining whether a positional information in the information stored in the dictionary storage section is contained in a range specified on the basis of the positional information, extracting the information and the URL in the case that the positional information is contained in the range, embedding a link that corresponds to the URL of the link destination in the extracted information, thereafter generating a screen provided with information that shows the presence of a link, and transmitting the screen to the user terminal.

8. The window display system according to claim 7, **characterized in that:**
the positional information transmitter furthermore transmits coordinates of the superimposed region of the overlapping window to the server; and
the screen generator furthermore determines whether positional information of the information stored in the dictionary storage section is contained in a range specified based on the positional information, extracts the information and URL in the case that the positional information is contained in the range, embeds a link that corresponds to the URL of the link destination in the extracted information in a position other than the superimposed region, thereafter generates a screen provided with information that shows the presence of a link, and transmits the screen to the user terminal.

9. The window display system according to any of claims 6 to 8, **characterized in that:**
information correlated with the positional information is information of shops in the positional information.

10. The window display system according to any of claims 1 to 9, **characterized in that:**
the overlapping window processor furthermore monitors the scroll state of the original window and erases the displayed overlapping window when scrolling has been detected, and redisplays the overlapping window when the scrolling of the original window has been detected to have stopped.

11. A user terminal in a window display system for displaying a screen in which a link is embedded in text in a superimposed region of an original window in an overlapping window superimposed and displayed on the original window that is displayed on a display device of a user terminal, the user terminal in a window display system **characterized in that** an overlapping window processor in the user terminal comprises:
a text acquisition section for acquiring text of the original window in the superimposed region of the original window and the overlapping window;
a text transmitter for transmitting the acquired text to a predetermined server; and
a display processor for receiving from at least the server a keyword contained in the text and a URL of the link destination thereof, extracting from a VRAM an image of the original window in the superimposed region to thereby display the image in the superimposed region of the overlapping window, embedding a link that corresponds to the URL of the link destination in relation to the portion that corresponds to the keyword in the displayed image and thereafter generating a screen provided with information that shows the presence of a link, and displaying the screen in the overlapping window, wherein:
the server determines whether the keyword stored in the server in advance is contained in the text on the basis of the text received from the user terminal, and transmits to the user terminal the keyword and the URAL that corresponds to the keyword.

12. A user terminal in a window display system for displaying a screen in which a link is embedded in text in a superimposed region of an original window in an overlapping window superimposed and displayed on the original window that is displayed on a display device of a user terminal, the user terminal in a window display system **characterized in that** an overlapping window processor in the user terminal comprises:
a text acquisition section for acquiring text of the original window in the superimposed region of the original window and the overlapping window;
a text transmitter for transmitting to a predetermined server the acquired text, coordinates of the superimposed region in the overlapping window, and coordinates of each text; and
a display processor for receiving a screen generated in the server and displaying the screen in the overlapping window, wherein:
the server determines whether the keyword stored in the server in advance is contained in the text on the basis of the text received from the user terminal, extracts the URL that corresponds to the keyword, embeds a link that corresponds to the URL of the link destination in a position of the keyword contained in the text on the basis of the coordinates of the text, and the coordinates of the superimposed region received from the user terminal, thereafter generates a screes provided with information that shows the presence of a link, and transmits the screen to the user terminal.

13. A user terminal in a window display system for displaying a screen in which a link is embedded in information of a range contained in map information in an original window, in an overlapping window superimposed and displayed on the original window that is displayed on a display device of a user terminal, the user terminal in a window display system **characterized in that** an overlapping window processor in the user terminal comprises:
a positional information acquisition section for acquiring positional information that shows the position of map information of the original window in the superimposed region of the original window and the overlapping window;
a positional information transmitter for transmitting the acquired positional information to a predetermined server; and
a display processor for receiving, from at least the server, information of a range contained in the map information and a URL of the link destination thereof on the basis of the positional information, extracting from a VRAM an image of the original window in the superimposed region to thereby display the image in the superimposed region of the overlapping window, embedding a link that corresponds to the URL of the link destination in information received from the server and thereafter generating a screen provided with information that shows the presence of a link, and displaying the screen in the overlapping window, wherein:
the server determines whether positional information of the information stored in the server in advance is contained in a range specified based on the positional information received from the user terminal, extracts the information and URL in the case that the positional information is contained in the range, and transmits the information and URL to the user terminal.

14. A user terminal in a window display system for displaying a screen in which a link is embedded in information of a range contained in map information in an original window, in an overlapping window superimposed and displayed on the original window that is displayed on a display device of a user terminal, the user terminal in a window display system **characterized in that** an overlapping window processor in the user terminal comprises:
a positional information acquisition section for acquiring positional information that shows the position of map information of the original window in the superimposed region of the original window and the overlapping window;
a positional information transmitter for transmitting the acquired positional information to a predetermined server; and
a display processor for receiving a screen generated in the server and displaying the screen in the overlapping window, wherein:
the server determines whether positional information of the information stored in the server in advance is contained in a range specified based on the positional information received from the user terminal, extracts the information and URL in the case that the positional information is contained in the range, embeds a link that corresponds the URL of the link destination in the extracted information, thereafter generates a screen provided with information that shows the presence of a link, and transmits the screen to the user terminal.

15. A program for causing a user terminal to function in a window display system for displaying a screen in which a link is embedded in text in a superimposed region of an original window in an overlapping window superimposed and displayed on the original window that is displayed on a display device of a user terminal, the program **characterized**
**by** causing the user terminal to function as:
a text acquisition section for acquiring text of the original window in the superimposed region of the original window and the overlapping window;
a text transmitter for transmitting the acquired text to a predetermined server; and
a display processor for receiving from at least the server a keyword contained in the text and a URL of the link destination thereof, extracting from a VRAM an image of the original window in the superimposed region to thereby display the image in the superimposed region of the overlapping window, embedding a link that corresponds to the URL of the link destination in relation to the portion, that corresponds to the keyword is the displayed image and thereafter generating a screen provided with information that shows the presence of a link, and displaying the screen in the overlapping window, wherein:
the server determines whether the keyword stored in the server in advance is contained in the text on the basis of the text received from the user terminal, and transmits to the user terminal the keyword and the URL that corresponds to the keyword.

16. A program for causing a user terminal to function in a window display system for displaying a screen in which a link is embedded in text in a superimposed region of an original window in an overlapping window superimposed and displayed on the original window that is displayed on a display device of a user terminal, the program **characterized by** causing the user terminal to function as:
a text acquisition section for acquiring text of the original window in the superimposed region of the original window and the overlapping window:
a text transmitter for transmitting to a predetermined server the acquired text, coordinates of the superimposed region in the overlapping window, and coordinates of each text; and
a display processor for receiving a screen generated in the server and displaying the screen in the overlapping window, wherein:
the server determines whether the keyword stored in the server in advance is contained in the text on the basis of the text received from the user terminal, extracts the URL that corresponds to the keyword, embeds a link that corresponds to the URL of the link destination in a position of the keyword contained in the text on the basis of the coordinates of the text and the coordinates of the superimposed region received from the user terminal, thereafter generates a screen provided with information that shows the presence of a link, and transmits the screen to the user terminal.

17. A program for causing a user terminal to function in a window display system for displaying a screen in which a link is embedded in information of a range contained in map information in an original window, in an overlapping window superimposed and displayed or the original window that is displayed on a display device of a user terminal, the program **characterized by** causing the user terminal to function as:
a positional information, acquisition section for acquiring positional information that shows the position of map information of the original window in the superimposed region of the original window and the overlapping window;
a positional information transmitter for transmitting the acquired positional information to a predetermined server; and
a display processor for receiving, from at least the server, information of a range contained in the map information and a URL of the link destination thereof on the basis of the positional information, extracting from a VRAM an image of the original window in the superimposed region to thereby display the image in the superimposed region of the overlapping window, embedding a link that corresponds to the URL of the link destination in information received from the server and thereafter generating a screen provided with information that shows the presence of a link, and displaying the screen in the overlapping window, wherein:
the server determines whether positional information of the information stored in the server in advance is contained in a range specified based on the positional information received from the user terminal, extracts the information and URL in the case that the positional information is contained in the range, and transmits the information and URL to the user terminal.

18. A program for causing a user terminal to function in a window display system for displaying a screen in which a link is embedded in information of a range contained in map information in an original window, in an overlapping window superimposed and displayed on the original window that is displayed on a display device of a user terminal, the program **characterized by** causing the user terminal to function as:
a positional information acquisition section for acquiring positional information that shows the position of map information of the original window in the superimposed region of the original window and the overlapping window;
a positional information transmitter for transmitting the acquired positional information to a predetermined server; and
a display processor for receiving a screen generated in the server and displaying the screen in the overlapping window, wherein:
the server determines whether positional information of the information stored in the server in advance is contained in a range specified based on the positional, information received from the user terminal, extracts the information and URL in the case that the positional information is contained in the range, embeds a link that corresponds to the URL of the link destination in the extracted information, thereafter generates a screen provided with information that shows the presence of a link, and transmits the screen to the user terminal.
